# EUROPEAN PATENT APPLICATION

(11) **EP 3 104 234 A1**
(43) Date of publication of application: **14.12.2016**
(21) Application number: 15761047.8
(22) Date of filing: 13.03.2015
(51) Int. Cl.: G05B 19/042, G05B 19/05

(54) **PROGRAMMABLE CONTROLLER AND DEVICE CONTROL METHOD USING SAID PROGRAMMABLE CONTROLLER**

(30) Priority: 14.03.2014 JP 2014052234
(71) Applicant: Omron Corporation, Kyoto-shi, Kyoto 600-8530 (JP)
(72) Inventor: MANABE, Mikiko, Kyoto-shi Kyoto 600-8530 (JP); NAMIE, Masaki, Kyoto-shi Kyoto 600-8530 (JP); FUJII, Takashi, Kyoto-shi Kyoto 600-8530 (JP)
(74) Representative: Horn Kleimann Waitzhofer Patentanwälte PartG mbB
(86) International application number: PCT/JP2015/057570
(87) International publication number: WO 2015/137505

(57) **Abstract**

A virtual device setup information storage unit (11) stores setup information indicating whether to use a real device or to use a virtual device program simulating the real device in place of the real device. A program execution unit (41) refers to the setup information, and executes the virtual device program when the setup information indicates use of the virtual device.

## Description

### FIELD

The present invention relates to a programmable controller, and a device control method implemented by a programmable controller.

### BACKGROUND

A system in which a programmable controller and devices controlled by the programmable controller are connected with a bus or a network has been known (refer to, for example, Patent Literature 1, or Japanese Unexamined Patent Application Publication No. 2008-257400).

### CITATION LIST

### PATENT LITERATURE

Patent Literature 1: Japanese Unexamined Patent Application Publication No. 2008-257400

### SUMMARY

### TECHNICAL PROBLEM

Although some devices to be controlled by the programmable controller may be unprepared, completed devices may be connected to the programmable controller to verify whether the programmable controller operates normally.

However, the system described in Patent Literature 1 can show an error unless all the control target devices are connected to the programmable controller. In that case, the programmable controller cannot operate normally.

One or more aspects of the present invention are directed to a programmable controller operable when one or more of the control target devices are not connected, and a device control method implemented by the programmable controller.

### SOLUTION TO PROBLEM

A controller according to one aspect of the present invention includes a storage unit that stores setup information indicating whether to use a real device or to use a virtual device program simulating the real device in place of the real device, and a program execution unit that refers to the setup information and executes the virtual device program when the setup information indicates use of the virtual device.

In some embodiments, the setup information includes information for a plurality of devices, and indicates, for each of the plurality of devices, whether to use a real device or to use a virtual device program in place of the real device.

In some embodiments, the program execution unit executes the virtual device program by using a virtual input signal when the setup information indicates use of the virtual device program and when the real device simulated by the virtual device program is an input device.

In some embodiments, the program execution unit writes an execution result of the virtual device program to the storage unit, and executes control in a manner not to write a signal from the real device to the storage unit.

In some embodiments, the program execution unit executes the virtual device program and stores a signal resulting from execution of the virtual device program into the storage unit as a virtual output signal when the setup information indicates use of the virtual device program and when the real device simulated by the virtual device program is an output device.

In some embodiments, the program execution unit stores the signal resulting from execution of the virtual device program into the storage unit as the virtual output signal, and does not transmit the signal to the real device.

A device control method according to another aspect of the present invention is implemented by a controller that controls a real device connected to the controller and executes a virtual device program simulating the real device in place of the real device. The method includes causing the controller to receive, when the real device is not connected to the controller, information designating use of the virtual device program in place of the real device, and causing the controller to execute the virtual device program designated to be used.

The method according to the above aspect of the present invention is implemented by a controller that controls a real device connected to the controller and executes a virtual device program simulating the real device in place of the real device. The method includes causing the controller to receive information designating use of the virtual device program in place of the real device to support checking whether the real device operates normally, and causing the controller to execute the virtual device program designated to be used.

A device control method according to another aspect of the present invention is implemented by a controller that controls a real device connected to the controller and executes a virtual device program simulating the real device in place of the real device. The method includes causing the controller to receive information designating use of the virtual device program in place of a real input device to support checking whether a user program operates normally when the real input device receives an input specific signal, causing the controller to receive information designating a prestored specific signal as a virtual input signal for the virtual device program, causing the controller to execute the virtual device program designated to be used, and causing the controller to execute the user program that operates based on an execution result of the virtual device program.

A device control method according to another aspect of the present invention is implemented by a controller that controls a real device connected to the controller, and executes a virtual device program simulating the real device in place of the real device and executes a virtual control target program in place of a control target controlled by the real device. The method includes causing the controller to receive information designating use of a first virtual device program in place of a real input device, use of a second virtual device program in place of a real output device, and use of a virtual control target program in place of the control target controlled by the real output device to support checking whether a user program operates normally, causing the controller to receive setup information designating a virtual output signal of the virtual control target program as a virtual input signal for the first virtual device program and designating a virtual input signal of the virtual control target program as a virtual output signal from the second virtual device, causing the controller to execute the first virtual device program based on the setup information, causing the controller to execute the user program that operates based on an execution result of the first virtual device program, causing the controller to execute the second virtual device program based on the setup information, and causing the controller to execute the virtual control target program based on the setup information.

### ADVANTAGEOUS EFFECTS

The controller is operable when one or more of the control target devices are not connected to the controller.

### BRIEF DESCRIPTION OF THE DRAWINGS

Fig. 1 is a diagram describing the configuration of a PLC according to one embodiment of the present invention.
Fig. 2 is a diagram describing an example of configuration information.
Fig. 3 is a diagram describing an example of virtual device setup information.
Fig. 4 is a diagram describing the operation of a VB-UNIT#0 execution unit simulating a real device B-UNIT#0 (analog input unit).
Fig. 5 is a diagram describing the operation of a VN-UNIT#0 execution unit simulating a device N-UNIT#0 (servo driver).
Fig. 6 is a flowchart showing a device control procedure performed by the PLC according to the first embodiment.
Fig. 7 is a flowchart showing a device control procedure performed by a PLC according to a second embodiment.
Fig. 8 is a graph showing execution results obtained using a real device and obtained by executing a virtual device program.
Fig. 9 is a flowchart showing a device control procedure performed by a PLC according to a third embodiment.
Fig. 10 is a diagram describing the configuration of a PLC according to a forth embodiment.
Fig. 11 is a flowchart showing a device control procedure performed by the PLC according to the forth embodiment.

### DETAILED DESCRIPTION

Embodiments of the present invention will now be described with reference to the drawings.

### First Embodiment

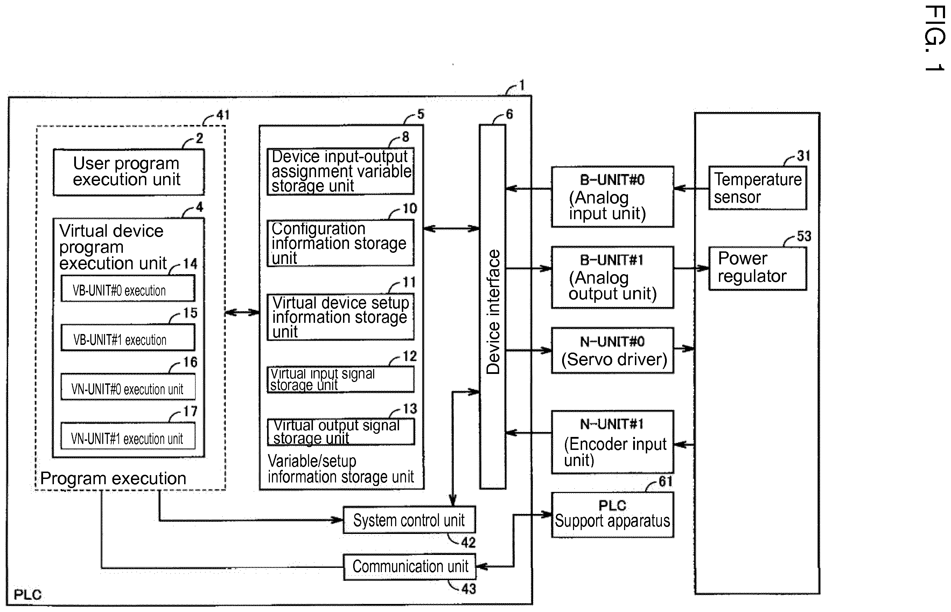

Fig. 1 is a diagram describing the configuration of a programmable logic controller (PLC) 1 according to a first embodiment of the present invention.

The PLC 1 includes a program execution unit 41, a system control unit 42, a variable/setup information storage unit 5, a device interface 6, and a communication unit 43.

The program execution unit 41 includes a user program execution unit 2 and a virtual device program execution unit 4. The variable/setup information storage unit 5 includes a device input-output assignment variable storage unit 8, a configuration information storage unit 10, a virtual device setup information storage unit 11, a virtual input signal storage unit 12, and a virtual output signal storage unit 13.

Configuration information stored in the configuration information storage unit 10, virtual device setup information stored in the virtual device setup information storage unit 11, and virtual input signals stored in the virtual input signal storage unit 12 are generated by a user operating the PLC support apparatus 61, and are transmitted to the PLC 1.

The device input-output assignment variable storage unit 8 stores device input-output assignment variables.

The user program execution unit 2 is implemented by a central processing unit (CPU) executing a user program stored in a storage unit (not shown). The virtual device program execution unit 4 is implemented by a CPU executing a virtual device program stored in a storage unit (not shown).

The system control unit 42 transmits and receives the values of device input-output assignment variables via the device interface 6 in every period preset in the PLC 1 to and from real devices B-UNIT#0 (analog input unit), B-UNIT#1 (analog output unit), N-UNIT#0 (servo driver), and N-UNIT#1 (encoder input unit), which are connected to the controller with a bus or a network.

The real device B-UNIT#0 (analog input unit) is an input device, and receives an analog signal indicating, for example, a temperature, from a temperature sensor 31, converts the received analog signal into a digital signal, and outputs the digital signal to the system control unit 42 via the device interface 6 in the PLC 1. The system control unit 42 stores the received digital signal into the device input-output assignment variable storage unit 8 as the value of a device input-output assignment variable.

The real device B-UNIT#1 (analog output unit) is an output device, and converts a digital signal, which is the value of a device input-output assignment variable transmitted from the user program execution unit 2 in the PLC 1 through the system control unit 42 and the device interface 6, into an analog signal, and transmits the analog signal to the power regulator 53.

The real device N-UNIT#0 (servo driver) is an output device, and operates in accordance with the value of a device input-output assignment variable (e.g., a speed instruction value) transmitted from the user program execution unit 2 in the PLC 1 through the system control unit 42 and the device interface 6.

The real device N-UNIT#1 (encoder input unit) is an input device, and outputs a counter value corresponding to position information from an encoder to the system control unit 42 via the device interface 6 in the PLC 1. The system control unit 42 stores the received feedback value into the device input-output assignment variable storage unit 8 as the value of a device input-output assignment variable.

The user program execution unit 2 executes a user program. The user program execution unit 2 performs processing in accordance with instructions included in the user program. The instructions included in the user program include instructions to refer to the value of a device input-output assignment variable stored in the device input-output assignment variable storage unit 8 and to write the value of a device input-output assignment variable into the device input-output assignment variable storage unit 8.

The configuration information storage unit 10 stores configuration information indicating control target devices using a user program.

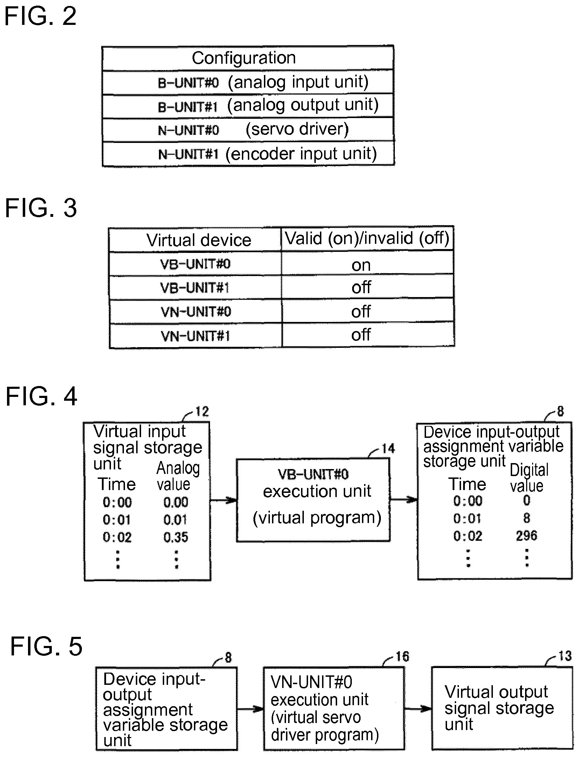

Fig. 2 is a diagram describing an example of configuration information.

This configuration information shows the real devices B-UNIT#0 (analog input unit), B-UNIT#1 (analog output unit), N-UNIT#0 (servo driver), and N-UNIT#1 (encoder input unit) to be controlled (control target devices) using a user program.

The system control unit 42 known in the art checks with each device defined by the configuration information via the device interface 6 and determines whether each device is connected to the PLC 1. When determining that any of the real devices is disconnected, the system control unit 42 lights an illumination device (not shown) to indicate an error and disables the user program.

In the present embodiment, the virtual device program execution unit 4 operates in place of any real device. When determining that any of the real devices is disconnected, the system control unit 42 does not light the illumination device to indicate an error, and enables the user program.

The virtual device setup information storage unit 11 stores virtual device setup information indicating whether the real devices are to be used or virtual device programs are to be used in place of the real devices.

Fig. 3 is a diagram describing an example of virtual device setup information.

The virtual device setup information shown in Fig. 3 indicates that a virtual device program VB-UNIT#0 is valid (on), or in other words, the virtual device program VB-UNIT#0 is to be used, and virtual device programs VB-UNIT#1, VN-UNIT#0, and VN-UNIT#1 are invalid (off), or in other words, the real devices B-UNIT#1, N-UNIT#0, and N-UNIT#1 are to be used.

The virtual input signal storage unit 12 stores a virtual input signal transmitted to the virtual device program execution unit 4.

The virtual output signal storage unit 13 stores a virtual output signal output from the virtual device program execution unit 4.

The virtual device program execution unit 4 includes a VB-UNIT#0 execution unit 14, a VB-UNIT#1 execution unit 15, a VN-UNIT#0 execution unit 16, and a VN-UNIT#1 execution unit 17.

When the virtual device setup information indicates that the virtual device program VB-UNIT#0 is on, the VB-UNIT#0 execution unit 14 executes the virtual device program VB-UNIT#0 simulating the functions of the real device B-UNIT#0 (analog input unit), which is an input device.

The VB-UNIT#0 execution unit 14 reads a virtual input signal for the virtual device program VB-UNIT#0 from the virtual input signal storage unit 12, and executes the virtual device program. The VB-UNIT#0 execution unit 14 stores the execution result into the device input-output assignment variable storage unit 8 as the value of the device input-output assignment variable for the device. If a signal (execution result of the real device) is transmitted from the real device to the PLC 1, the system control unit 42 executes control in a manner not to write the value of the transmitted signal to the device input-output assignment variable storage unit 8. This prevents the execution result of the real device from being written in a manner overlapping with the execution result of the virtual device program.

When the virtual device setup information indicates that the virtual device program VB-UNIT#1 is on, the VB-UNIT#1 execution unit 15 executes the virtual device program VB-UNIT#1 simulating the functions of the real device B-UNIT#1 (analog output unit), which is an output device. The VB-UNIT#1 execution unit 15 reads the value of the device input-output assignment variable for the device from the device input-output assignment variable storage unit 8, and executes the virtual device program VB-UNIT#1. The VB-UNIT#1 execution unit 15 stores the execution result into the virtual output signal storage unit 13. The system control unit 42 executes control in a manner not to output the value stored in the device input-output assignment variable storage unit 8 to the real device via the device interface 6.

When the virtual device setup information indicates that the virtual device program VN-UNIT#0 is on, the VN-UNIT#0 execution unit 16 executes the virtual device program VN-UNIT#0 simulating the functions of the real device N-UNIT#0 (servo driver), which is an output device. The VN-UNIT#0 execution unit 16 reads the value of the device input-output assignment variable for the device from the device input-output assignment variable storage unit 8, and executes the virtual device program VN-UNIT#0. The VN-UNIT#0 execution unit 16 stores the execution result into the virtual output signal storage unit 13. The system control unit 42 executes control in a manner not to output the value stored in the device input-output assignment variable storage unit 8 to the real device via the device interface 6.

When the virtual device setup information indicates that the virtual device program VN-UNIT#1 is on, the VN-UNIT#1 execution unit 17 executes the virtual device program VN-UNIT#1 simulating the functions of the real device N-UNIT#1 (encoder input unit), which is an input device. The VN-UNIT#1 execution unit 17 reads a virtual input signal for the virtual device program VN-UNIT#1 from the virtual input signal storage unit 12, and executes the virtual device program. The VN-UNIT#1 execution unit 17 stores the execution result into the device input-output assignment variable storage unit 8 as the value of the device input-output assignment variable for the device. If a signal (execution result of the real device) is transmitted from the real device to the PLC 1, the system control unit 42 executes control in a manner not to write the value of the transmitted signal to the device input-output assignment variable storage unit 8. This prevents the execution result of the real device from being written in a manner overlapping with the execution result of the virtual device program.

Fig. 4 is a diagram describing the operation of the VB-UNIT#0 execution unit 14 simulating the real device B-UNIT#0 (analog input unit).

The VB-UNIT#0 execution unit 14 reads a virtual input signal from the virtual input signal storage unit 12. This virtual input signal simulates a signal from the temperature sensor 31, and has analog values of 0.00, 0.01, 0.35... at times 0:00, 0:01, 0:02....

The VB-UNIT#0 execution unit 14 converts the analog value into a digital value, and stores the digital value into the device input-output assignment variable storage unit 8 as the value of a device input-output assignment variable. When, for example, the device B-UNIT#0 (analog input unit) smooths the analog value and outputs the resultant digital value, the VB-UNIT#0 execution unit 14, which simulates the device B-UNIT#0 (analog input unit), obtains, as its device input-output assignment variables, digital values 0, 8, 296... at times 0:00, 0:01, 0:02....

Fig. 5 is a diagram describing the operation of the VN-UNIT#0 execution unit 16 simulating the device N-UNIT#0 (servo driver).

The VN-UNIT#0 execution unit 16 reads the value of a device input-output assignment variable (e.g., speed instruction value) from the device input-output assignment variable storage unit 8, outputs the same signal as the signal output from the device N-UNIT#0 (servo driver) as a virtual output signal, and writes the signal to the virtual output signal storage unit 13.

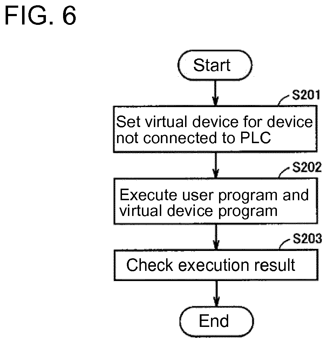

Fig. 6 is a flowchart showing a device control procedure performed by the PLC 1 according to the first embodiment.

In step S201, when any of the real devices defined by configuration information is not connected to the PLC 1, the PLC support apparatus 61 receives a user operation for requesting use of a virtual device program in place of the real device. The PLC support apparatus 61 generates virtual device setup information in accordance with the user operation, and transmits the information to the PLC 1. The communication unit 43 in the PLC 1 receives the virtual device setup information, and stores the information into the virtual device setup information storage unit 11. When, for example, the real device B-UNIT#0 is not connected to the PLC 1, the user may request use of the virtual device program VB-UN!T#0. As a result, the virtual device setup information shown in Fig. 3 is generated.

In step S202, the user program execution unit 2 executes a user program in every execution period preset in the PLC 1. When the user program refers to a device input-output assignment variable, the virtual device program execution unit 4 executes the corresponding virtual device program after the user program is executed. When virtual device setup information shown in Fig. 3 is generated, the VB-UNIT#0 execution unit 14 executes the virtual device program VB-UNIT#0 simulating the functions of the real device B-UNIT#0.

In step S203, the communication unit 43 in the PLC 1 transmits the value of the device input-output assignment variable stored in the device input-output assignment variable storage unit 8, which is the execution result of the user program and the virtual device program, to the PLC support apparatus 61. The PLC support apparatus 61 receives and displays the value of the device input-output assignment variable. The user can check the operation of the user program based on the displayed value of the device input-output assignment variable.

As described above, when any of the real devices defined by configuration information is not connected to the PLC, the present embodiment allows the user to check whether the user program has an error by executing the virtual device program in place of the disconnected real device.

### Second Embodiment

A system according to a second embodiment identifies a real device having an error among devices defined by configuration information when all the devices defined by configuration information are set as real devices. From all the devices defined by the configuration information, each device is selected one by one, and a virtual device program is designated to be used in place of the selected real device. When the virtual device program is executed in place of the real device and shows no error, the selected real device can be determined to have an error.

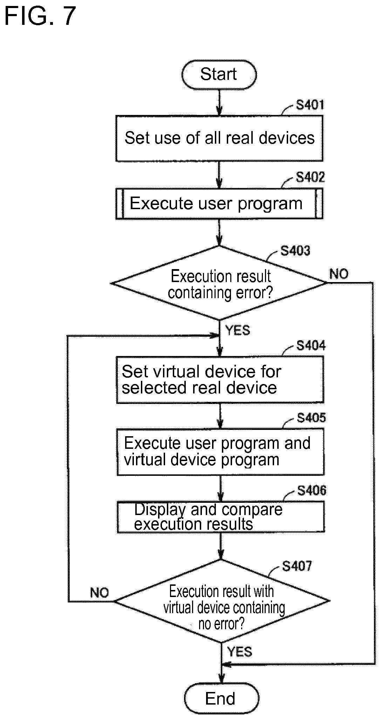

Fig. 7 is a flowchart showing a device control procedure performed by the PLC 1 according to the second embodiment.

In step S401, the PLC support apparatus 61 receives a user operation for requesting use of real devices for all the devices defined by configuration information. The PLC support apparatus 61 generates virtual device setup information in accordance with the user operation, and transmits the information to the PLC 1. The communication unit 43 in the PLC 1 receives the virtual device setup information, and stores the information into the virtual device setup information storage unit 11.

In step S402, the user program execution unit 2 executes a user program in every execution period preset in the PLC 1.

In step S403, the communication unit 43 in the PLC 1 transmits the value of the device input-output assignment variable in the device input-output assignment variable storage unit 8, which is the execution result of the user program, to the PLC support apparatus 61. The PLC support apparatus 61 receives and displays the value of the device input-output assignment variable. The user checks whether the displayed value of the device input-output assignment variable includes an error. When the user detects an error, the processing advances to step S404.

In step S404, the PLC support apparatus 61 receives a user operation for requesting use of a virtual device program in place of one of the devices defined by the configuration information. The PLC support apparatus 61 generates virtual device setup information in accordance with the user operation, and transmits the information to the PLC 1. The communication unit 43 in the PLC 1 receives the virtual device setup information, and stores the information into the virtual device setup information storage unit 11.

In step S405, the user program execution unit 2 executes the user program in every execution period preset in the PLC 1. When the user program refers to the device input-output assignment variable, the virtual device program execution unit 4 executes the corresponding virtual device program after the user program is executed.

In step S406, the communication unit 43 in the PLC 1 transmits the value of the device input-output assignment variable in the device input-output assignment variable storage unit 8, which is the execution result of the user program and the virtual device program, to the PLC support apparatus 61. The PLC support apparatus 61 receives the value of the device input-output assignment variable, compares the value received in step S406 with the value of the device input-output assignment variable received in step S403, and displays the comparison result.

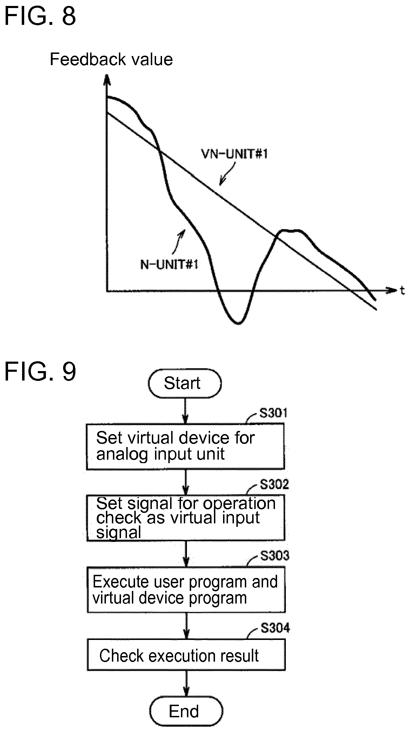

Fig. 8 is a graph showing a display example in step S406.

The device input-output assignment variable (feedback value) written to the device input-output assignment variable storage unit 8 after use of the real device N-UNIT#1 (encoder input unit) is compared with the device input-output assignment variable (feedback value) written to the device input-output assignment variable storage unit 8 after execution of the virtual device program VN-UNIT#1, and the comparison result is displayed.

When the user determines that the result from execution of the virtual device program has no error in step S407, the processing ends. When the user determines that the result from execution of the virtual device program has an error, the processing returns to step S404, and the PLC support apparatus 61 receives a user operation requesting use of a virtual device program in place of another real device. The PLC support apparatus 61 generates virtual device setup information in accordance with the user operation, and transmits the information to the PLC 1. The communication unit 43 in the PLC 1 receives the virtual device setup information, and stores the information into the virtual device setup information storage unit 11.

When the feedback value from use of the real device N-UNIT#1 (encoder input unit) is abnormal and the feedback value from execution of the virtual device program VN-UNIT#1 is normal as shown in Fig. 8, the user determines that the real device N-UNIT#1 has caused the error. The processing ends.

In the present embodiment described above, when a user program has an operational error, each real device is selected one by one, and a virtual device program is executed in place of the selected device to identify a real device that has caused the error.

### Third Embodiment

When a signal from a temperature sensor 31 indicates a specific situation, a user program, which operates in accordance with the signal from the temperature sensor 31, may be checked for an operational error. When, for example, the temperature sensor 31 outputs a signal indicating a high temperature, the user program may be checked for an operational error by determining whether intended processing can be performed. The operation of the user program may be conventionally checked with a time consuming procedure of actually raising the temperature of a detection target of the temperature sensor 31 to a high temperature.

In the present embodiment, the situation in which a signal indicating a high temperature is transmitted from the temperature sensor 31 is simulated by inputting a virtual input signal to a virtual device program simulating an analog input unit connected to the temperature sensor 31 and executing the program.

Fig. 9 is a flowchart showing a device control procedure performed by the PLC 1 according to the third embodiment.

In step S301, a PLC support apparatus 61 receives a user operation for requesting use of a virtual device program VB-UNIT#0 in place of a real device B-UNIT#0 (analog input unit) among real devices defined by configuration information. The PLC support apparatus 61 generates virtual device setup information in accordance with the user operation, and transmits the information to a PLC 1. A communication unit 43 in the PLC 1 receives the virtual device setup information, and stores the information into a virtual device setup information storage unit 11.

In step S302, the PLC support apparatus 61 receives a user operation for designating a virtual input signal as a signal from the temperature sensor 31 for which the normal operation of the user program is to be checked. The PLC support apparatus 61 generates a virtual input signal in accordance with the user operation, and transmits the signal to the PLC 1. The communication unit 43 in the PLC 1 receives the virtual input signal, and stores the signal into the virtual input signal storage unit 12. When, for example, the operation of the user program performed when the temperature sensor 31 transmits a signal indicating a high temperature is to be checked, the signal indicating a high temperature from the temperature sensor 31 is set as the virtual input signal.

In step S303, the user program execution unit 2 executes the user program that operates in accordance with a signal from the temperature sensor 31 in every period preset in the PLC 1. The VB-UNIT#0 execution unit 14 executes the virtual device program VB-UNIT#0 simulating the functions of the real device B-UNIT#0 in every period preset in the PLC 1. The VB-UNIT#0 execution unit 14 uses the virtual input signal specified in step S302 as a signal to be input.

In step S304, the communication unit 43 in the PLC 1 transmits the value of the device input-output assignment variable in the device input-output assignment variable storage unit 8, which is the execution result of the user program and the virtual device program, to the PLC support apparatus 61. The PLC support apparatus 61 receives and displays the value of the device input-output assignment variable. The user checks whether the user program operates normally when the temperature sensor 31 is under a specific situation, such as in a high temperature environment, based on the displayed value of the device input-output assignment variable.

In the present embodiment, as described above, a virtual device program simulating an analog input unit connected to the temperature sensor is executed using a virtual signal from the temperature sensor in a target situation for checking the operation of the user program as an input of the virtual device program. This allows the operation of the user program to be checked without actually placing the temperature sensor in the target situation.

### Fourth Embodiment

In the present embodiment, closed loop control is simulated using a virtual program to check whether a user program operates normally.

In closed loop control simulated in the present embodiment, a device B-UNIT#0 (analog input unit) converts an analog signal from a temperature sensor 31 into a digital signal, and transmits the signal to a PLC 90. A user program in the PLC 90 calculates a target value for controlling a control target based on the temperature, and the calculated target value is used to control the control target via a device B-UNIT#1 (analog output unit).

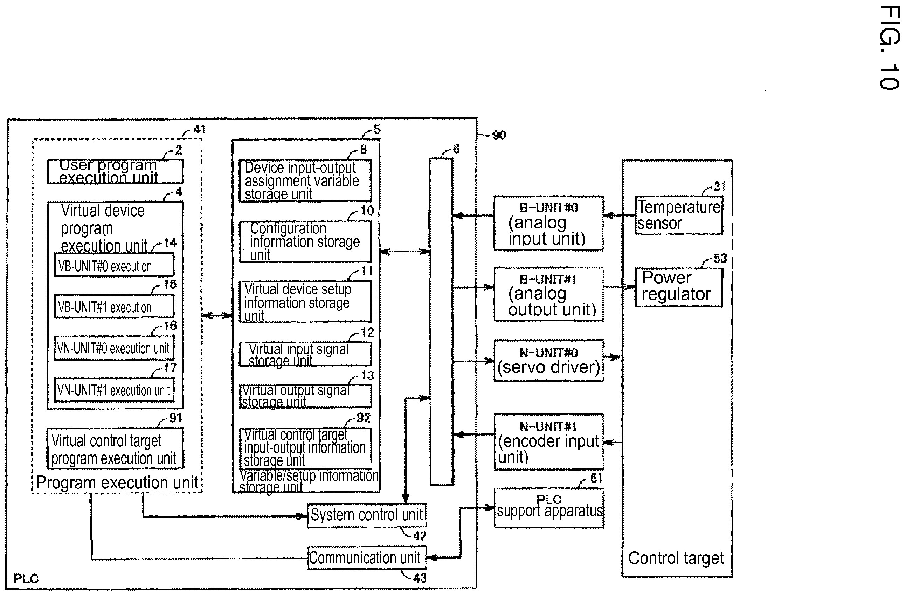

Fig. 10 is a diagram describing the configuration of the PLC 90 according to a forth embodiment.

The PLC 90 differs from the PLC 1 in Fig. 1 in that its program execution unit 41 includes a virtual control target program execution unit 91, and the variable/setup information storage unit 5 includes a virtual control target input-output information storage unit 92.

The virtual control target program execution unit 91 executes a virtual control target program simulating the operation of a control target. In other words, the virtual control target program simulates an operation in which a heater connected to a power regulator 53 operates to change the temperature upon receipt of an applied operational amount (current), and the resultant signal from the temperature sensor 31 changes.

The variable/setup information storage unit 5 includes a virtual control target input-output information storage unit 92.

Virtual control target inpu-output information defines an input and an output of the virtual control target program.

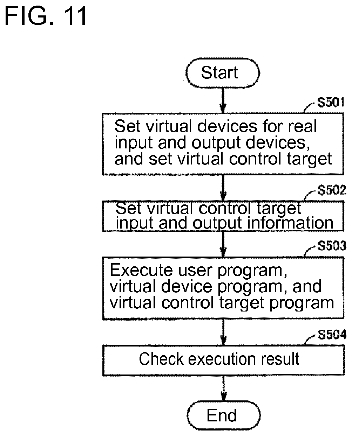

Fig. 11 is a flowchart showing a device control procedure performed by the PLC 90 according to the forth embodiment.

In step S501, the PLC support apparatus 61 receives a user operation for requesting use of a virtual device program VB-UNIT#0 in place of the real input device B-UNIT#0 (analog input unit) and use of a virtual device program VB-UNIT#1 in place of the real output device B-UNIT#1 (analog output unit), among real devices defined by configuration information. In addition, the PLC support apparatus 61 receives a user operation for requesting use of a virtual control target program in place of a control target. The PLC support apparatus 61 generates virtual device setup information in accordance with the user operation, and transmits the information to the PLC 90. The communication unit 43 in the PLC 90 receives the virtual device setup information, and stores the information into the virtual device setup information storage unit 11.

In step S502, the PLC support apparatus 61 receives a user operation for designating a virtual output signal of the virtual device program VB-UNIT#1 as a virtual control target input signal of the virtual control target program and a virtual input signal of the virtual device program VB-UNIT#0 as a virtual control target output signal of the virtual control target program. The PLC support apparatus 61 generates virtual control target input and output information in accordance with the user operation, and transmits the information to the PLC 90. The communication unit 43 in the PLC 90 receives the virtual control target input and output information, and stores the information into the virtual control target input-output information storage unit 92.

In step S503, the user program execution unit 2 executes the user program that operates in accordance with a signal from the temperature sensor 31 in every period preset in the PLC 90. The VB-UNIT#0 execution unit 14 executes the virtual device program VB-UNIT#0 simulating the functions of the real device B-UNIT#0 (analog input unit) in every period preset in the PLC 90 based on the virtual control target input and output information. The VB-UNIT#1 execution unit 15 executes the virtual device program VB-UNIT#1 simulating the functions of the real device B-UNIT#1 (analog output unit) in every period preset in the PLC 90 based on the virtual control target input and output information. The virtual control target program execution unit 95 executes the virtual control target program simulating the functions of the control target in every period preset in the PLC 90 based on the virtual control target input and output information. The VB-UNIT#1 execution unit 15 stores the execution result into the virtual output signal storage unit 13. The virtual control target program execution unit 95 uses the execution result of the VB-UNIT#1 execution unit 15 stored in the virtual output signal storage unit 13 as an input signal. The virtual control target program execution unit 95 writes the execution result to the virtual input signal storage unit 12. The VB-UNIT#0 execution unit 14 uses the virtual input signal stored in the virtual input signal storage unit 12 by the virtual control target program execution unit 95 as an input signal. This enables virtual closed loop control.

In step S504, the communication unit 43 in the PLC 90 transmits the value of a device input-output assignment variable in the device input-output assignment variable storage unit 8, which is the execution result of the user program and the virtual device program, to the PLC support apparatus 61. The PLC support apparatus 61 receives and displays the value of the device input-output assignment variable. The user checks whether the user program operates normally based on the displayed value of the device input-output assignment variable.

As described above, the present embodiment enables the virtual closed loop control using the virtual device program and the virtual control target program, and allows the closed loop control operation of the user program to be checked. Modifications

The present invention is not limited to the above embodiments, and may be modified in the following forms.
(1) In the first embodiment of the present invention, the user designates use of a virtual device program simulating a real device in place of the real device when the real device is not connected to the PLC 1. However, the embodiment is not limited to this structure.
   For example, the system control unit 42 checks with each real device defined by configuration information to determine whether each device is connected to the PLC 1. When determining that any real device is not connected to the PLC 1, the system control unit 42 may execute a virtual device program simulating the real device in place of the real device.
(2) Although the virtual device program is executed automatically in every period preset in the PLC 1 in the embodiments of the present invention, the embodiments are not limited to this structure. The user program execution unit may execute a user program and activate a virtual device program simulating a real device when the user program refers to a variable associated with the real device. In other embodiments, the user program execution unit may execute a user program and activate a virtual device program simulating a real device in parallel with execution of the user program when the user program refers to a variable associated with the real device or the user program includes a description defining an update. In other embodiments, when a user program refers to a device input-output assignment variable, a virtual device program simulating a real device and its virtual control target program may be executed after execution of the user program.

The embodiments disclosed herein are only illustrative in all respects and should not be construed to be restrictive. The scope of the invention is designated by the appended claims, and it is intended that all changes are contained in the claims and equivalent meanings and ranges.

### REFERENCE SIGNS LIST

- 1, 90: PLC
- 2: user program execution unit
- 3: motion control program execution unit
- 4: virtual device program execution unit
- 5: variable/setup information storage unit
- 6: device interface
- 8: device input-output assignment variable storage unit
- 10: configuration information storage unit
- 11: virtual device setup information storage unit
- 12: virtual input signal storage unit
- 13: virtual output signal storage unit
- 14: VB-UNIT#0 execution unit (virtual program)
- 15: VB-UNIT#1 execution unit (virtual program)
- 16: VN-UNIT#0 execution unit (virtual program)
- 17: VN-UNIT#1 execution unit (virtual program)
- 31: temperature sensor
- 41: program execution unit
- 42: system control unit
- 43: communication unit
- 53: power regulator
- 61: PLC support apparatus
- 91: virtual control target program execution unit
- 92: virtual control target input-output information storage unit

## Claims

1. A controller, comprising:
a storage unit configured to store setup information indicating whether to use a real device or to use a virtual device program simulating the real device in place of the real device; and
a program execution unit configured to refer to the setup information and execute the virtual device program when the setup information indicates use of the virtual device.

2. The controller according to claim 1, wherein
the setup information includes information for a plurality of devices, and indicates, for each of the plurality of devices, whether to use a real device or to use a virtual device program in place of the real device.

3. The controller according to claim 2, wherein
the program execution unit executes the virtual device program by using a virtual input signal when the setup information indicates use of the virtual device program and when the real device simulated by the virtual device program is an input device.

4. The controller according to claim 3, wherein
the program execution unit writes an execution result of the virtual device program to the storage unit, and executes control in a manner not to write a signal from the real device to the storage unit.

5. The controller according to claim 2, wherein
the program execution unit executes the virtual device program and stores a signal resulting from execution of the virtual device program into the storage unit as a virtual output signal when the setup information indicates use of the virtual device program and when the real device simulated by the virtual device program is an output device.

6. The controller according to claim 5, wherein
the program execution unit stores the signal resulting from execution of the virtual device program into the storage unit as the virtual output signal, and does not transmit the signal to the real device.

7. A device control method implemented by a controller configured to control a real device connected to the controller and to execute a virtual device program simulating the real device in place of the real device, the method comprising:
causing the controller to receive, when the real device is not connected to the controller, information designating use of the virtual device program in place of the real device; and
causing the controller to execute the virtual device program designated to be used.

8. A device control method implemented by a controller configured to control a real device connected to the controller and to execute a virtual device program simulating the real device in place of the real device, the method comprising:
causing the controller to receive information designating use of the virtual device program in place of the real device to support checking whether the real device operates normally; and
causing the controller to execute the virtual device program designated to be used.

9. A device control method implemented by a controller configured to control a real device connected to the controller and to execute a virtual device program simulating the real device in place of the real device, the method comprising:
causing the controller to receive information designating use of the virtual device program in place of a real input device to support checking whether a user program operates normally when the real input device receives an input specific signal;
causing the controller to receive information designating a prestored specific signal as a virtual input signal for the virtual device program;
causing the controller to execute the virtual device program designated to be used; and
causing the controller to execute the user program that operates based on an execution result of the virtual device program.

10. A device control method implemented by a controller configured to control a real device connected to the controller and to execute a virtual device program simulating the real device in place of the real device and execute a virtual control target program in place of a control target controlled by the real device, the method comprising:
causing the controller to receive information designating use of a first virtual device program in place of a real input device, use of a second virtual device program in place of a real output device, and use of a virtual control target program in place of the control target controlled by the real output device to support checking whether a user program operates normally;
causing the controller to receive setup information designating a virtual output signal of the virtual control target program as a virtual input signal for the first virtual device program and designating a virtual input signal of the virtual control target program as a virtual output signal from the second virtual device;
causing the controller to execute the first virtual device program based on the setup information;
causing the controller to execute the user program that operates based on an execution result of the first virtual device program;
causing the controller to execute the second virtual device program based on the setup information; and
causing the controller to execute the virtual control target program based on the setup information.

## Amended claims

### Amended claims under Art. 19.1 PCT

**1.** (Amended) A controller, comprising:
a storage unit configured to store setup information indicating whether to use a real device or to use a virtual device program simulating the real device in place of the real device; and
a program execution unit configured to refer to the setup information and execute the virtual device program when the setup information indicates use of the virtual device,
wherein the setup information includes information for a plurality of devices, and indicates, for each of the plurality of devices, whether to use a real device or to use a virtual device program in place of the real device,
the program execution unit executes the virtual device program by using a virtual input signal when the setup information indicates use of the virtual device program and when the real device simulated by the virtual device program is an input device, and
the program execution unit writes an execution result of the virtual device program to the storage unit, and executes control in a manner not to write a signal from the real device to the storage unit.

**2.** (Canceled)

**3.** (Canceled)

**4.** (Canceled)

**5.** (Amended) The controller according to claim 1, wherein
the program execution unit executes the virtual device program and stores a signal resulting from execution of the virtual device program into the storage unit as a virtual output signal when the setup information indicates use of the virtual device program and when the real device simulated by the virtual device program is an output device.

**6.** The controller according to claim 5, wherein
the program execution unit stores the signal resulting from execution of the virtual device program into the storage unit as the virtual output signal, and does not transmit the signal to the real device.

**7.** (Amended) A device control method implemented by a controller configured to control a real device connected to the controller and to execute a virtual device program simulating the real device in place of the real device, the method comprising:
causing the controller to receive, when the real device is not connected to the controller, information designating use of the virtual device program in place of the real device; and
causing the controller to execute the virtual device program designated to be used,
wherein executing the virtual device program includes executing the virtual device program by using a virtual input signal when the real device simulated by the virtual device program is an input device, writing a signal resulting from execution of the virtual device program to a storage unit, and executing control in a manner not to write a signal from the real device to the storage unit.

**8.** (Amended) A device control method implemented by a controller configured to control a real device connected to the controller and to execute a virtual device program simulating the real device in place of the real device, the method comprising:
causing the controller to receive information designating use of the virtual device program in place of the real device to support checking whether the real device operates normally; and
causing the controller to execute the virtual device program designated to be used,
wherein executing the virtual device program includes executing the virtual device program by using a virtual input signal when the real device simulated by the virtual device program is an input device, writing a signal resulting from execution of the virtual device program to a storage unit, and executing control in a manner not to write a signal from the real device to the storage unit.

**9.** (Amended) A device control method implemented by a controller configured to control a real device connected to the controller and to execute a virtual device program simulating the real device in place of the real device, the method comprising:
causing the controller to receive information designating use of the virtual device program in place of a real input device to support checking whether a user program operates normally when the real input device receives an input specific signal;
causing the controller to receive information designating a prestored specific signal as a virtual input signal for the virtual device program;
causing the controller to execute the virtual device program designated to be used; and
causing the controller to execute the user program that operates based on an execution result of the virtual device program,
wherein executing the virtual device program includes executing the virtual device program by using a virtual input signal when the real device simulated by the virtual device program is an input device, writing a signal resulting from execution of the virtual device program to a storage unit, and executing control in a manner not to write a signal from the real device to the storage unit.

**10.** A device control method implemented by a controller configured to control a real device connected to the controller and to execute a virtual device program simulating the real device in place of the real device and execute a virtual control target program in place of a control target controlled by the real device, the method comprising:
causing the controller to receive information designating use of a first virtual device program in place of a real input device, use of a second virtual device program in place of a real output device, and use of a virtual control target program in place of the control target controlled by the real output device to support checking whether a user program operates normally;
causing the controller to receive setup information designating a virtual output signal of the virtual control target program as a virtual input signal for the first virtual device program and designating a virtual input signal of the virtual control target program as a virtual output signal from the second virtual device;
causing the controller to execute the first virtual device program based on the setup information;
causing the controller to execute the user program that operates based on an execution result of the first virtual device program;
causing the controller to execute the second virtual device program based on the setup information; and
causing the controller to execute the virtual control target program based on the setup information.
